# EUROPÄISCHE PATENTANMELDUNG

(11) **EP 4 273 650 A1**
(43) Veröffentlichungstag der Anmeldung: **08.11.2023**
(21) Anmeldenummer: 22171381.1
(22) Anmeldetag: 03.05.2022
(51) Int. Cl.: G05B 23/02

(54) **REDUKTION VON WARTUNGSBEDINGTEN STILLSTANDSZEITEN IN DER PRODUKTION**

(71) Anmelder: Siemens Aktiengesellschaft, 80333 München (DE)
(72) Erfinder: Blank, Rene, 12249 Berlin (DE); Borwieck, Carsten, 14052 Berlin (DE); Franke, Martin, 14089 Berlin (DE); Frühauf, Peter, 14612 Falkensee (DE); Heimann, Matthias, 14469 Potsdam (DE); Knofe, Rüdiger, 14513 Teltow (DE); Müller, Bernd, 16259 Falkenberg (DE); Nerreter, Stefan, 15754 Heidesee OT Blossin (DE); Wittreich, Ulrich, 16727 Velten (DE)
(74) Vertreter: Siemens Patent Attorneys

(57) **Zusammenfassung**

Die Erfindung betrifft ein Verfahren zum Betreiben eines Produktionssystems, wobei das Produktionssystem eine Mehrzahl von Anlagen umfasst. Es werden aktuelle erste Informationen (InfoAl .... InfoAn) zu jeder Anlage betreffend den jeweiligen Verschleiß zur Verfügung gestellt werden, und zweite Informationen (Info3) zu jeder Anlage betreffend empfohlene Wartungszeitpunkte, sowie dritte Informationen (InfoCAL) betreffend eine zukünftige Auslastung des Produktionssystems und/oder bevorstehende Unterbrechungen der Produktion. Unter Verwendung der ersten (InfoAl .... InfoAn), zweiten (Info3) und dritten (InfoCAL) Informationen wird ein Zeitpunkt für eine Wartung am Produktionssystem, bestimmt, und welche Teilmenge der Anlagen zu diesem Zeitpunkt gewartet werden soll. Weiterhin betrifft die Erfindung hierzu korrespondierend eine Vorrichtung oder ein System zur Datenverarbeitung, ein Computerprogramm, einen computerlesbaren Datenträger, sowie ein Datenträgersignal.

## Beschreibung

Die Erfindung betrifft Verfahren zum Betreiben eines Produktionssystems, wobei das Produktionssystem eine Mehrzahl von Anlagen umfasst.

Die Fertigung von Produkten, z.B. die SMT Bestückung von Leiterplatten, erfolgt meist in Fertigungslinien, wo verschiedene Anlagen nacheinander verschiedene Fertigungsschritte vollziehen. Diese Anlagen müssen gewartet werden, wobei unter der Wartung im Folgenden alle Maßnahmen verstanden werden, welche dem Erhalt oder der Wiederherstellung der Gebrauchsfähigkeit der jeweiligen Anlage dienen. Üblicherweise kann während der Durchführung einer Wartung die jeweilige Anlage nicht oder nicht in vollem Umfang genutzt werden. Beispiele für Wartungsmaßnahmen sind das Hinzufügen von Betriebsstoffen oder Verbrauchsmitteln, planmäßiges Austauschen von Verschleißteilen, oder auch die Reparatur oder der Ersatz von defekten Teilen. Wartungen finden normalerweise in festen Wartungs-Intervallen statt, deren Länge von Anlage zu Anlage variieren kann, oder bei Bedarf aufgrund eines Defektes oder drohenden Defektes.

Da eine Anlage während der Wartung nicht oder nicht voll funktionstüchtig ist, wird die Produktion durch eine Wartung stark beeinträchtigt, da die Schritte, die die verschiedenen Anlagen durchführen, aufeinander aufbauen. Üblicherweise steht das gesamte aus mehreren Anlagen bestehende Produktionssystem still, während eine oder mehrere Anlagen gewartet werden.

Der Erfindung liegt die Aufgabe zugrunde, ein Verfahren zum Betreiben eines Produktionssystems aufzuzeigen, welches wartungsbedingte Stillstandszeiten reduziert.

Diese Aufgabe wird durch ein Verfahren mit den Merkmalen des Anspruchs 1 gelöst. Ferner sind Gegenstand der Erfindung eine entsprechende Vorrichtung oder ein System zur Datenverarbeitung, ein entsprechendes Computerprogramm, ein entsprechender computerlesbarer Datenträger, und ein entsprechendes Datenträgersignal. Vorteilhafte Ausgestaltungen und Weiterbildungen sind Gegenstand von Unteransprüchen.

Das erfindungsgemäße Verfahren eignet sich für ein Produktionssystem mit einer Mehrzahl von Anlagen. Es werden aktuelle erste Informationen zu jeder Anlage betreffend den jeweiligen Verschleiß zur Verfügung gestellt, sowie zweite Informationen zu jeder Anlage betreffend empfohlene Wartungszeitpunkte, und dritte Informationen betreffend eine zukünftige Auslastung des Produktionssystems und/oder bevorstehende Unterbrechungen der Produktion. Unter Verwendung der ersten, zweiten und dritten Informationen wird ein Zeitpunkt für eine Wartung am Produktionssystem bestimmt, und welche Teilmenge der Anlagen zu diesem Zeitpunkt gewartet werden soll.

Die Produktion erfolgt mittels mehrerer Anlagen. Hierbei kann eine Anlage einer Maschine entsprechen, oder auch mehrere Maschinen umfassen. Jede Anlage führt einen bestimmten Schritt innerhalb des Produktionsablaufs durch. Vorzugsweise unterscheiden sich die Anlagen voneinander.

Es wird angestrebt, einen günstigen Zeitpunkt zu finden, an dem eine Wartung von allen oder manchen Anlagen des Produktionssystems erfolgen kann. Um diesen aufzufinden, werden zumindest drei Arten von Informationen berücksichtigt. Die ersten Informationen beschreiben den aktuellen Zustand der Anlagen hinsichtlich des Verschleißes. Welche Daten hierfür geeignet sind, hängt von der Art der jeweiligen Anlage ab. Da die ersten Informationen den aktuellen Zustand beschreiben, ändern sie sich von Zeit zu Zeit. Es kann ein kontinuierliches Zur-Verfügung-Stellen der ersten Informationen vorgesehen sein, oder zu bestimmten Zeitpunkten, oder auch bedarfsabhängig, z.B. bei Änderungen von Werten. Die zweiten Informationen sind hingegen solchen Änderungen vorzugsweise nicht unterworfen; die empfohlenen Wartungszeitpunkte können z.B. Vorgaben des Anlagenherstellers sein, wie z.B. eine Wartung in bestimmten Zeitintervallen oder nach einer bestimmten Maschinenlaufzeit. Während die ersten und die zweiten Informationen einzelne Anlagen betreffen, beziehen sich die dritten Informationen auf das gesamte Produktionssystem. Das Ausmaß, in welchem Produkte pro Zeiteinheit hergestellt werden, ist üblicherweise nicht konstant; die dritten Informationen betreffen die geplante Produktion, also die Planung, wie viele Produkte an welchen Zeitpunkten oder Tagen hergestellt werden sollen und/oder wann eine Produktion nicht möglich ist.

Vorzugsweise sind die Anlagen mit Messgeräten versehen, welche die ersten Informationen erfassen. Die verwendeten Messgeräte können hierbei von Anlage zu Anlage variieren. Geeignete Messdaten sind z.B. die Stromaufnahme, die elektrische Spannung, der Drehmomentverlauf, die Temperatur der Anlage, ein hydraulischer oder pneumatischer Druck, Vibrationswerte, und die Maschinenlaufzeit. Hierbei können pro Anlage eine oder mehrere der genannten Datenarten erfasst werden.

In Weiterbildung der Erfindung werden die ersten, zweiten und dritten Informationen einer künstlichen Intelligenz zur Verfügung gestellt, welche die Bestimmung von Zeitpunkt und Teilmenge der zu wartenden Anlagen vornimmt. Hierbei kann die künstliche Intelligenz im Rahmen eines machine-learning-Prozesses empfangene erste Informationen und Informationen über erfolgte Wartungen und Defekte der Anlagen auswerten. Durch den Abgleich von den Verschleiß beschreibenden Informationen und Informationen, welche bei Wartungen oder Reparaturen gewonnen wurden, kann die künstliche Intelligenz lernen, die ersten Informationen in Zukunft besser zu verstehen und somit einen Wartungsbedarf besser zu erkennen oder prognostizieren.

In Ausgestaltung der Erfindung kann die künstliche Intelligenz zusätzlich ermitteln, welches Material für die Wartung erforderlich ist. Dies kann sich daraus ergeben, welche Anlagen zu warten sind, und wie stark der jeweilige Verschleiß ist.

Vorzugsweise wird zu dem bestimmten Zeitpunkt das Produktionssystem zu Wartungszwecken stillgelegt und die Wartung der Teilmenge der Anlagen durchgeführt. Die Bestimmung von Zeitpunkt und Teilmenge der Anlagen ist somit der Trigger für die tatsächliche Durchführung dieser Maßnahmen.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt ablaufen. Hierzu kommt eines oder mehrere miteinander zusammenwirkende Computerprogramme zum Einsatz. Werden mehrere Programme verwendet, so können diese gemeinsam auf einem Computer gespeichert und von diesem ausgeführt werden, oder auch auf verschiedenen Computern an verschiedenen Orten. Da dies funktional gleichbedeutend ist, wird vorliegend im Singular "das Computergrogramm" und "der Computer" formuliert.

Für das Computerprogramm bedeutet der Schritt des Zur-Verfügung-Stellens von Informationen, dass diese von dem Computerprogramm empfangen werden und ihm somit zu Verfügung stehen.

Im Folgenden wird die Erfindung anhand eines Ausführungsbeispiels näher erläutert. Dabei zeigen:
Figur 1: schematisch eine Fertigungslinie,
Figur 2: ein Blockschaltbild zur Illustration des Einsatzes einer KI für eine Fertigungslinie mit mehreren Anlagen,
Figur 3: ein Ablaufdiagramm,
Figur 4: ein Planungssystem.

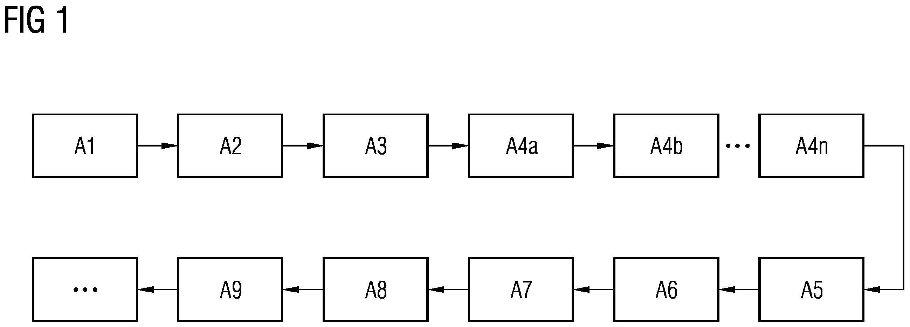

Figur 1 zeigt schematisch in Form eines Blockdiagramms eine Fertigungslinie. Solche Fertigungslinien sind Produktionssysteme, welche aus verschiedenen Anlagen bestehen. Die aufeinanderfolgenden Anlagen stellen Bearbeitungsstationen dar, welche nach einem Linienprinzip starr miteinander verkettet sind, und zwischen welchen der Transfer des bis zur jeweiligen Station bearbeiteten Produktes stattfindet.

Die Fertigungslinie der Figur 1 dient der Elektronikfertigung mittels SMT-Bestückung (SMT: Surface-Mounting Technology). Die Bearbeitung beginnt im Schema oben links, wo Leiterplatten als Anfangsmaterial zur Verfügung gestellt und von der ersten Anlage A1 in Form eines Leiterplattenabstaplers weitergereicht werden. Bei der zweiten Anlage A2 handelt es sich um einen Lotpastendrucker, welcher unter Verwendung von Schablonen Lotpaste auf Pads der Leiterplatte aufbringt. Die Überprüfung dieses Prozessschrittes findet in der dritten Anlage A3 mit der SPI Lotpasteninspektion (SPI: Solder Paste Inspection) statt. Daraufhin erfolgt die Bauelementebestückung in den Anlagen A4a, ..., A4n, wo die oberflächenmontierten Bauelemente (englisch SMD: Surface-Mounted Device) auf die entsprechenden Lotpunkte aufgebracht werden. Die Überprüfung dieser Bestückung erfolgt in der fünften Anlage A5 mittels automatischer optischer Inspektion (englisch: Automated Optical Inspection, AOI), wo unter Verwendung von Bildverarbeitungsverfahren Fehler aufgefunden werden können. Die Erhitzung der bestückten Leiterplatten erfolgt in der sechsten Anlage A6, einer Konvektionslötanlage. Es folgen eine siebte Anlage A7 für Sonderbestückprozesse und eine achte Anlage A8 für Sonderlötprozesse. In der neunten Anlage A9 findet die elektrische Prüfung statt, d.h. es wird sichergestellt, dass die Bauteile durch die Lötprozesse auf der Leiterplatte korrekt kontaktiert und verbunden wurden.

Die Erfindung ist nicht auf den Einsatz bei der Elektronikfertigung beschränkt. Vielmehr eignet sie sich auch für andersartige Produktionssysteme, bei welchen mehrere Anlagen zur Produktherstellung zum Einsatz kommen. Wie anhand des Beispiels der Elektronikfertigung beschrieben, sind in einer Fertigungslinie eine Vielzahl verschiedener Anlagen vorhanden. An diesen Anlagen sind Service- und Wartungsarbeiten nach spezifischen Vorgaben notwendig. Diese Vorgaben stammen üblicherweise vom Hersteller der jeweiligen Anlage; beispielsweise kann vorgegeben sein, dass nach einer bestimmten Laufzeit eine Wartung zu erfolgen hat. Im Rahmen dieser Wartungsarbeiten steht nicht nur die betroffene Anlage, sondern im Normallfall - falls keine parallelen Systeme vorhanden sind - die komplette Fertigungslinie still. Da die unterschiedlichen Anlagen üblicherweise zu unterschiedlichen Zeitpunkten gewartet werden müssen, steht die gesamte Fertigungslinie zu den entsprechenden Zeitpunkten komplett still, was eine damit verbundene Summierung fehlender Fertigungskapazität und damit verbundene Stillstandskosten zur Folge hat.

Verbessert werden kann dies dadurch, dass in definierten Intervallen, z.B. einmal pro Quartal, die Fertigungslinie angehalten und die Wartung an nicht nur an einer, sondern an mehreren Maschinen gleichzeitig durchgeführt wird. Es besteht jedoch immer noch das Problem des nicht-planmäßigen Ausfalls einer Anlage durch einen Defekt. In diesem Fall wird der Service seitens des Werkes angefordert und nimmt vor Ort eine Diagnose und Reparatur der betroffenen Anlage vor. Die entsprechenden Ersatzteile hat er auf Basis bekannter Ausfälle der Vergangenheit dabei oder bestellt diese nach der Fehlerdiagnose. Auch während dieser Zeit, welche bis zur Reparatur der jeweiligen Anlage verstreicht, ist die komplette Fertigungslinie außer Betrieb.

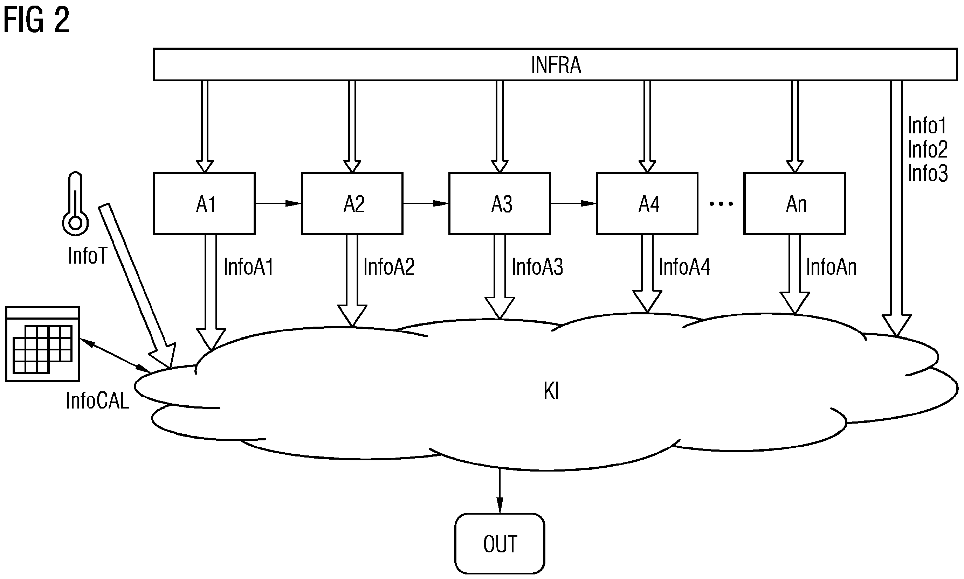

Im Folgenden wird erläutert, wie zur Planung und Optimierung von Stillstandszeiten bei der Wartung von Fertigungslinien vorgegangen werden kann. Zur Erläuterung dieser Planung der Wartungszeiten zeigt Figur 2 ein Blockschaltbild zur Illustration des Einsatzes einer Künstlichen Intelligenz KI für eine Fertigungslinie mit mehreren Anlagen. Die in die als Wolke symbolisierte KI eingehenden Pfeile stehen für verschiedene Informationen, welcher der KI zur Verfügung gestellt werden:

Die Werkinfrastruktur INFRA ist für die Bereitstellung von Strom, Klima, Abluft, Kühlung, technische Gase usw. für die Räumlichkeiten und für die einzelnen Anlagen der Fertigungslinie zuständig. Informationen Info1 zu überordneten Themen der Infrastruktur INFRA wie z.B. geplante Abschaltungen der Klimaanlage aufgrund von deren Wartung oder Defekten, werden der KI zur Verfügung gestellt. Hierbei handelt es sich also um Informationen, welche zwar für das Ablaufen des Fertigungsprozesses relevant sind, jedoch nicht spezifisch einzelne Anlagen betreffen. Ferner werden auch Informationen Info2, welche den aktuellen Zustand einzelner Anlagen betreffen, der KI zur Verfügung gestellt. Dies umfasst eingehende und gegebenenfalls auch von den Anlagen abgegebene Mengen von Strom, Wärme/Kälte, Abluft, technische Gase. Ferner werden außer den den aktuellen Zustand betreffende anlagenspezifischen Informationen Info2 sowohl allgemeine als auch die Vergangenheit betreffende anlagenspezifischen Informationen Info3 an die KI übergeben. Bei den allgemeinen Informationen Info3 handelt es sich z.B. um Handlungsempfehlungen und Wartungsintervalle der jeweiligen Anlagenhersteller. Die die Vergangenheit betreffenden anlagenspezifischen Informationen Info3 können z.B. bekannte Risiken und Defektfälle aus bisherigen Wartungen enthalten, also eine Defekt-, Reparatur- und Wartungshistorie jeder Anlage.

Ferner liefern auch die Anlagen A1 ... An Informationen InfoA1 ... InfoAn an die KI. Hierbei handelt es sich um Daten, welche Schlüsse auf den aktuellen Verschleiß der jeweiligen Anlage ermöglichen. Die meisten modernen Maschinen erfassen und liefern im Rahmen des Health Monitoring verschiedene Parameter, welche mit dem Verschleiß der jeweiligen Anlage zusammenhängen. Es können sowohl diese bereits bestehenden Sensoriken ausgenutzt, als auch weitere geeignete ergänzt werden. Beispiele sind:
- Stromaufnahme,
- elektrische Spannung,
- Drehmomentverläufe,
- Temperaturen,
- Drücke (hydraulisch, pneumatisch),
- Vibrationen,
- Maschinenlaufzeiten.

Anhand der elektrischen Kenndaten, also den Werten von Strom und Spannung, können Widerstandszunahmen oder zunehmende Reibungen in elektrische Anlagen detektiert werden, was ein Hinweis auf schwergängige Lager und somit zunehmendem Verschleiß sein kann. Ebenso verhält es sich mit ansteigenden Temperaturen, insbesondere wenn dies sich an einem lokalen Hotspot ereignet, und Veränderungen von pneumatischen und hydraulischen Drücken. Auch zeigen zunehmende Vibrationen und Drehmomente möglichen Verschleiß an. Entsprechendes gilt für lange Laufzeiten. Grundsätzlich gilt, dass mit zunehmendem Verschleiß eine Wartung nötiger wird, und dass bei hohem Verschleiß ein baldiger Ausfall des Gerätes als nicht unwahrscheinliche Möglichkeiten anzusehen ist.

Ferner erhält die KI auch Informationen InfoT betreffend aktuelle und in der Vergangenheit liegende Klimadaten der Fertigungsumgebung. Dies beinhaltet einerseits die Lufttemperaturen und Feuchtewerte der Fertigungsumgebung, als auch die Jahreszeit. Diese Daten können verwendet werden, um mögliche jahreszeitabhängige Einflüsse auf die oben genannten Sensordaten zu ermitteln und eine klimaabhängige Fehlinterpretation zu vermeiden.

Unter Berücksichtigung der beschriebenen Informationen Info1, Info2, Info 3, InfoT, InfoAl ... InfoAn kann die KI nun entscheiden, wann ein Linienstillstand stattfinden soll und welche Anlagen während dieses Stillstandes gewartet werden sollen. Die Informationen Info1 der Werkinfrastruktur INFRA können derart genutzt werden, dass hierdurch Zeitspannen angezeigt werden, in welchen die Produktion ohnehin nur schwerlich oder gar nicht erfolgen kann, z.B. weil die Klimaanlage gewartet werden muss und somit die Klimatisierung ausfällt. Die aktuellen anlagenspezifischen Informationen Info2 können technische Probleme einer Anlage anzeigen, welche eine baldige Wartung sinnvoll machen, wie z.B. ein erhöhter Stromverbrauch oder ein erhöhtes Maß an warmer Abluft. Ferner geben die anlagenspezifischen Informationen Info3 hinsichtlich der Herstellervorgaben zur Wartung gewichtige Anhaltspunkte, wann eine Wartung durchgeführt werden sollte. Auch die in den anlagenspezifischen Informationen Info3 enthaltenen historischen Daten helfen bei der Einschätzung, mit welcher Wahrscheinlichkeit mit einem Ausfall oder einer dringend durchzuführenden Wartung zu rechnen ist. Die Informationen InfoAl ... InfoAn aus dem Health Monitoring zeigen wie oben beschrieben einen möglichen Verschleiß auf verschiedene Weisen an; dies kann sowohl in die Richtung weisen, dass eine baldige Wartung nötig ist, als auch, dass mit einer Wartung noch zugewartet werden kann.

Außer den bereits erläuterten Informationen erhält die KI ferner die Informationen InfoCal betreffend den Terminplan der Fertigung. Dieser Terminplan beschreibt im Allgemeinen, welche Stückzahlen zu welchen Zeiten gefertigt werden sollen. Dies setzt sich zusammen aus Informationen über die Linienauslastung, die Auftragslage, kalendarische Informationen über Arbeitstage, Wochenenden, Feiertage, etc. Die Stillstandszeiten werden von der KI mithilfe dieser Informationen InfoCal bevorzugt so gelegt, dass die Beeinträchtigung der Produktion möglichst gering ist. Z.B. eignen sich Wartungsarbeiten an Wochenenden und Feiertagen oder in Phasen geringer Auslastung der Fertigungslinie. Es wird also versucht, die Wartung möglichst auf Tage mit übergeordneten "Störereignissen" wie Brückentage, Wochenenden, Zeiten mit geringerer Linienauslastung zu legen.

Als Ergebnis OUT gibt die KI die Angabe eines in der Zukunft liegenden Termins für einen Linienstillstand zu Wartungszwecken aus. Hiermit verbunden ist die Angabe derjenigen Anlage oder Anlagen, die zu warten oder zu reparieren sind.

Vorzugsweise löst die KI automatisch die hierzu erforderlichen Bestellungen aus; dies betrifft sowohl das Wartungspersonal als auch gegebenenfalls erforderliche Materialien und Ersatzteile. Bei geplanter Wartung können also die Servicetechniker, der Einkauf oder das Wartungsteam automatisch mobilisiert und auf die geplante Wartung vorbereitet werden. Dies kann beispielsweise durch eine Zusendung der verschleißrelevanten Daten aus dem Health Monitoring der Anlagen erfolgen, was einen Bedarf konkreter Ersatzteile anzeigen kann. Die benötigten Ersatzteile können also bei Order des Service / der Wartung automatisch mitbestellt und vom Servicetechniker mitgebracht werden. Somit reduzieren sich die Zeiten, welche zur Diagnose des Defektes, Bestellung und Beschaffung der Ersatzteile notwendig sind. Das automatische Informieren von Servicetechniker / Einkauf / Wartungsteams ist von Vorteil, da es eine Ressourcenschonung im Werk bedeutet.

Durch den Doppelpfeil zwischen dem Kalendersymbol und der die KI symbolisierenden Wolke soll verdeutlicht werden, dass durch die KI auch eine Umplanung von Fertigungen erfolgen kann. So kann die KI nach der Entscheidung für einen bestimmten Zeitpunkt der Wartung die für die durch die Wartung stillstehende Linie geplanten Fertigungsaufträge automatisch auf andere vergleichbare Linien umplanen.

Die KI führt somit eine zentrale Sammlung und Auswertung von diversen Daten durch, z.B. für vom Hersteller angegebene Serviceintervalle, Anlagenmesswerte mit Verschleißbezug, bekannte Risiken und Defektfällen aus bisherigen Wartungen, geplante Auslastungen der Fertigungslinie, Brückentage, Wochenende, .... Mit diesem zentralen Datenmanagement kann aufgrund der Zusammenschau von diversen Daten eine Gesamtscheidung für die Wartung aller Anlagen getroffen werden, welche möglichst seltene Wartungsstillstände kombiniert mit einer geringen Wahrscheinlichkeit des Ausfalls einer Anlage aufgrund eines Defekts. Zur Optimierung der Stillstandszeit wird versucht, einen Großteil der Anlagen oder sogar die komplette Linie zum gleichen Zeitpunkt zu warten. D.h. beim Fertigungslinienstillstand werden alle aktuell notwendigen und in naher Zukunft als notwendig absehbare Wartungen an den einzelnen Anlagen gleichzeitig durchgeführt; dies bedeutet, dass ein Teil der Anlagen früher als mit Blick auf die Einzelanlage notwendig gewartet wird, während andere Anlagen beispielsweise erst beim nächsten / übernächsten Serviceintervall gewartet werden.

Das in Bezug auf eine einzelne Fertigungslinien beschriebene Vorgehen kann auf den Fall mehrere Fertigungslinien übertragen werden. Die KI ist also für die Entscheidung über Linienstillstände zu Wartungszwecken für mehrere Linien zuständig. In diesem Fall kann die KI ferner berücksichtigen, dass die Zeitpunkte der Wartung einzelner Fertigungslinien aufeinander abgestimmt sind. Beispielsweise könnte die Linie 1 Montag bis Dienstag und die Linie 2 Mittwoch bis Donnerstag zu Wartungszwecken stillgelegt werden, damit nicht mehrere Linien gleichzeitig stillstehen.

Die KI verbessert ihre Entscheidungen im Laufe der Zeit mittels Maschinenlernen (MI, machine learning). Da ihr sowohl die die Vergangenheit betreffenden anlagenspezifischen Informationen Info3 vorliegen, als auch die Informationen InfoAl ... InfoAn des Health Monitoring, kann die KI im Laufe der Zeit lernen, die Anzeichen des Health Monitoring besser zu verstehen und eine weitere Optimierung der Wartungszeitpunkte durchführen oder bevorstehende Ausfälle frühzeitig durch Wartung zu verhindern. Auf Basis der verschleißrelevanten Daten vor und nach der Wartung können mögliche Effekte der Wartung auf das verschleißrelevante Verhalten der Anlagen abgeschätzt werden und Wartungszeitpunkt weiter optimiert werden; evtl. können Wartungen dann seltener stattfinden. Durch ein Beobachten der Health Monitoring Daten über einen längeren Zeitraum kann ein möglicher Verschleiß einzelner Anlagen frühzeitig detektiert und bei geplanten Wartungsterminen der Linie mit in die Wartung / Reparatur einbezogen werden, ohne dass die Anlage aufgrund von Verschleiß ausfällt. Es können somit Fehler oder Defekte von Anlagen durch Betrachtung vergangener Ereignisse vorhergesagt bzw. durch rechtzeitige Wartung vermieden werden.

Der Einsatz der KI erlaubt eine Abkehr von der bisher üblichen Wartung in starren Zyklen, z.B. einmal pro Quartal. Durch die intelligente Auswertung von Daten mehrerer Anlagen ist es möglich, möglichst wenig wartungsbedingte Stillstandszeiten in Kauf nehmen zu müssen. Dies wird erreicht, indem die komplette Linie betrachtet wird, und nicht jede Anlage der Linie einzeln. Die Wartungsentscheidungen werden also so getroffen, dass diese nicht für die einzelne Anlage, sondern für die gesamte Fertigungslinie im Hinblick auf zu minimierende Stillstandszeiten möglichst gut sind. Dies steigert die Produktionseffizienz der Linie erheblich. Von Vorteil bei der beschriebenen Vorgehensweise ist dementsprechend, dass durch Optimierung der Wartungszeiten und gemeinsames Ausnutzen von Stillstandszeiten für die Wartung verschiedener Anlagen die Stillstandszeiten in der Linie über längere Zeiträume betrachtet verkürzt werden kann. Ein weiterer Vorteil ist, dass durch Planung der Wartungszeitpunkte auf Tage mit geringen Auslastungen, oder Brücken- und Feiertagen kaum Fertigungsrückstand aufgebaut wird.

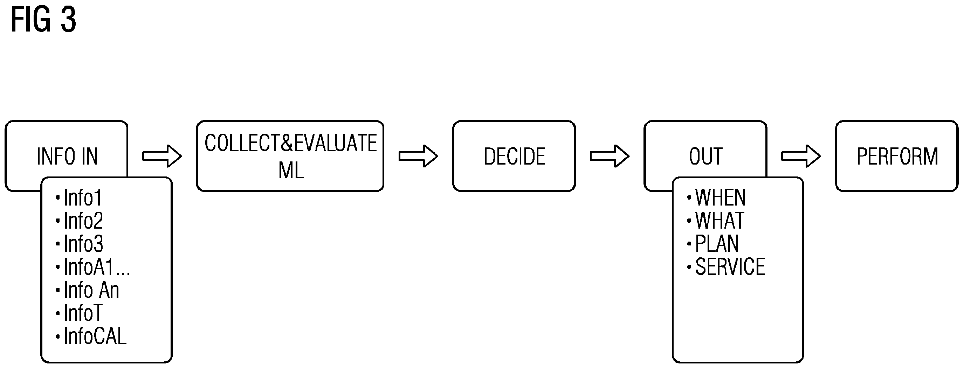

Zusammenfassend zeigt Figur 3 ein Ablaufdiagramm zu dem geschilderten Vorgehen. Zunächst werden in einem ersten Schritt INFO IN von der KI die verschiedenen Informationen Info1, Info2, Info3, InfoA1... Info An, InfoT, InfoCAL empfangen. Dieser erste Schritt ist nicht so zu verstehen, dass die Informationen einmalig empfangen werden; vielmehr werden der KI kontinuierlich oder von Zeit zu Zeit aktualisierte Informationen zur Verfügung gestellt, so dass der Informationsempfang auch während der Durchführung der folgenden Schritte stattfindet. Daraufhin führt die KI im Schritt COLLECT&EVALU-ATE eine Sammlung, Speicherung und Auswertung der empfangenen Informationen durch. Auch das Maschinenlernen ML zur Verbesserung der zu treffenden Entscheidungen findet unter Berücksichtigung von neu empfangenen Daten statt. Im Schritt DECIDE entscheidet die KI nun über Details eines anstehenden Stillstands zu Wartungszwecken. Ergebnisse hiervon werden im Schritt OUT ausgegeben. Dies betrifft den Zeitpunkt WHEN des geplanten Stillstandes, die von der geplanten Wartung betroffenen Anlagen WHAT, eine Umplanung PLAN der bislang für den Zeitraum des Stillstandes geplanten Produktion, und ein Informieren SERVICE der für den Service relevanten Stelle einschließlich der Angabe von eventuell benötigtem Material. Schließlich wird in einem abschließenden Schritt PERFORM die Wartung wie von der KI entschieden durchgeführt.

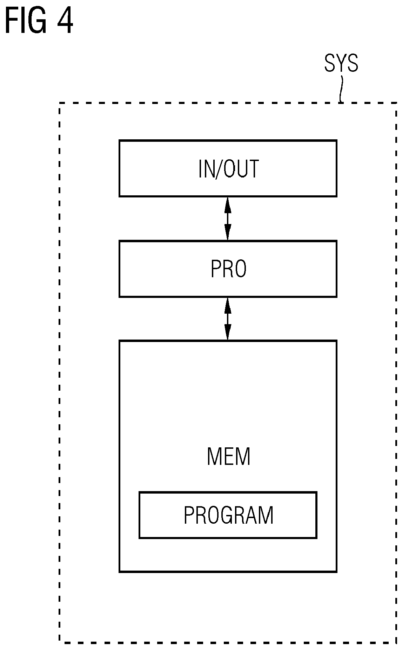

Figur 4 zeigt, wie ein Planungssystem SYS aufgebaut sein kann, in welchem die KI implementiert ist. Während die im Folgenden näher erläuterte Bestandteile in der Figur einfach vorhanden sind, ist es auch möglich, dass diese in mehrfacher Ausführung vorhanden sind, z.B. als verteiltes System. Auf diese Weise kann die Funktionalität des Systems SYS auf mehrere, gegebenenfalls hierarchisch miteinander verknüpfte, Systeme aufgeteilt werden. Dieses oder diese können sich in den Fabrikräumlichkeiten befinden, in welchen die Produktion abläuft, oder auch an anderer Stelle.

Das Planungssystem SYS umfasst eine Recheneinheit bzw. einen Prozessor PRO. Dieser ist verbunden mit einem Speicher MEM, in welchem ein Computerprogramm PROGRAM, welches die KI abbildet, abgelegt ist. Bei dem Speicher MEM handelt es sich vorzugsweise um ein nicht-flüchtiges computerlesbares Datenspeichermedium. Die Speicherung kann auf jegliche Weise erfolgen, welche geeignet ist, die Auslesbarkeit durch eine Recheneinheit zu gewährleisten, wie z.B. durch magnetische Speicherung mittels Diskette, optische Speicherung mittels CD, magneto-optische Speicherung, ROM (Read Only Memory) Speicherung, RAM (Random Access Memory) Speicherung, EPROM (Erasable Programmable Read-Only Memory), EEPROM (Electrically Erasable Programmable Read-Only Memory), Flash-Memory.

Durch Ausführen der Instruktionen des Programms PROGRAM in dem Prozessor PRO werden die Schritte der oben erläuterten Vorgehensweise durchgeführt. Hierzu ist der Prozessor PRO mit einer Ein- und Ausgabeeinheit IN/OUT verbunden, über welche Informationen zwischen dem System SYS und anderen Komponenten ausgetauscht werden können; hierüber können insbesondere die Informationen Info1, Info2, Info3, InfoA1... Info An, InfoT, InfoCAL empfangen und die Ergebnisse OUT ausgegeben werden. Die Schnittstelle zwischen dem System SYS und externen Komponenten kann hierbei auf geeignete Weise ausgestaltet sein, z.B. über Funk oder über Kabel, und die Kommunikation kann über geeignete Standards erfolgen.

Die Erfindung wurde voranstehend an einem Ausführungsbeispiel beschrieben. Es versteht sich, dass zahlreiche Änderungen und Modifikationen möglich sind, ohne dass der Rahmen der Erfindung verlassen wird.

## Patentansprüche

1. Verfahren zum Betreiben eines Produktionssystems,
wobei das Produktionssystem eine Mehrzahl von Anlagen umfasst,
aktuelle erste Informationen (InfoAl .... InfoAn) zu jeder Anlage betreffend den jeweiligen Verschleiß zur Verfügung gestellt werden,
zweite Informationen (Info3) zu jeder Anlage betreffend empfohlene Wartungszeitpunkte zur Verfügung gestellt werden,
dritte Informationen (InfoCAL) betreffend eine zukünftige Auslastung des Produktionssystems und/oder bevorstehende Unterbrechungen der Produktion zur Verfügung gestellt werden,
unter Verwendung der ersten (InfoAl .... InfoAn), zweiten (Info3) und dritten (InfoCAL) Informationen bestimmt wird:
- ein Zeitpunkt für eine Wartung am Produktionssystem,
- welche Teilmenge der Anlagen zu diesem Zeitpunkt gewartet werden soll.

2. Verfahren nach Anspruch 1, bei dem
die Anlagen mit Messgeräten versehen sind, welche die ersten Informationen (InfoAl .... InfoAn) erfassen.

3. Verfahren nach Anspruch 1 oder 2, bei dem die ersten Informationen (InfoAl .... InfoAn) betreffen:
- eine Stromaufnahme, und/oder
- eine elektrische Spannung, und/oder
- einen Drehmomentverlauf, und/oder
- eine Temperatur, und/oder
- einen hydraulischen oder pneumatischen Druck, und/oder
- einen Vibrationswert, und/oder
- eine Maschinenlaufzeit.

4. Verfahren nach einem der Ansprüche 1 bis 3, bei dem die ersten (InfoAl .... InfoAn), zweiten (Info3) und dritten (InfoCAL) Informationen einer künstlichen Intelligenz (KI) zur Verfügung gestellt werden, welche die Bestimmung vornimmt.

5. Verfahren nach Anspruch 4, bei dem
die künstliche Intelligenz (KI) im Rahmen eines machinelearning-Prozesses empfangene erste Informationen (InfoA1 .... InfoAn) und Informationen über erfolgte Wartungen und Defekte der Anlagen auswertet.

6. Verfahren nach Anspruch 4 oder 5, bei dem die künstliche Intelligenz (KI) zusätzlich ermittelt, welches Material für die Wartung erforderlich ist.

7. Verfahren nach einem der Ansprüche 1 bis 6, bei dem zu dem bestimmten Zeitpunkt das Produktionssystem zu Wartungszwecken stillgelegt und die Wartung der Teilmenge der Anlagen durchgeführt wird.

8. Vorrichtung oder System zur Datenverarbeitung (SYS), umfassend Mittel zur Ausführung des Verfahrens nach einem der Ansprüche 1 bis 7.

9. Computerprogramm (PROGRAM), umfassend Befehle, die bei der Ausführung des Programms durch einen Computer diesen veranlassen, die Schritte des Verfahrens nach einem der Ansprüche 1 bis 7 auszuführen.

10. Computerlesbarer Datenträger (MEM), auf dem das Computerprogramm (PROGRAM) nach Anspruch 9 gespeichert ist.

11. Datenträgersignal, das das Computerprogramm (PROGRAM) nach Anspruch 9 überträgt.
